# EUROPÄISCHE PATENTSCHRIFT

(11) **EP 3 213 396 B1**
(45) Veröffentlichungstag und Bekanntmachung des Hinweises auf die Patenterteilung: **29.04.2020**
(21) Anmeldenummer: 15767436.7
(22) Anmeldetag: 01.09.2015
(51) Int. Cl.: H02K 5/04, H02K 11/01, H02K 17/16, H02K 11/40

(54) **ELEKTRISCHE ASYNCHRONMASCHINE**
ELECTRICAL ASYNCHRONOUS MACHINE
MACHINE ÉLECTRIQUE ASYNCHRONE

(30) Priorität: 29.10.2014 DE 102014222123
(43) Veröffentlichungstag der Anmeldung: 06.09.2017
(73) Patentinhaber: Robert Bosch GmbH, 70442 Stuttgart (DE)
(72) Erfinder: REITER, Jochen, 71336 Waiblingen (DE)
(86) Internationale Anmeldenummer: PCT/EP2015/069927
(87) Internationale Veröffentlichungsnummer: WO 2016/066302

(56) Entgegenhaltungen:
- EP-A2- 0 236 690
- EP-A2- 1 378 985
- DE-A1-102011 078 428
- GB-A- 571 896
- GB-A- 807 967
- US-A- 3 242 361
- US-A- 5 979 087
- US-A- 6 011 338
- US-A1- 2001 005 106
- US-A1- 2012 112 571
- ADABI J ET AL: "Calculations of capacitive couplings in induction generators to analyse shaft voltage", THE INSTITUTION OF ENGINEERING AND TECHNOLOGY. JOURNAL,, Bd. 3, Nr. 3, 1. Mai 2010 (2010-05-01), Seiten 379-390, XP006035159, ISSN: 1755-4543, DOI: 10.1049/IET-PEL:20080332

## Beschreibung

### Gebiet der Erfindung

Die Erfindung betrifft eine elektrische Asynchronmaschine, beispielsweise einen elektrischen Asynchronmotor, für ein Fahrzeug.

### Hintergrund der Erfindung

Asynchronmaschinen umfassen in der Regel einen Stator, dessen Wicklungen über Wickelköpfe an den Enden des Stators geschlossen werden, und einen Rotor mit einem Rotorkäfig, dessen Kurzschlussstäbe mit Kurschlussringen an den Enden des Rotors miteinander elektrisch verbunden sind. Die Wickelköpfe und die Kurzschlussringe liegen normalerweise direkt nebeneinander, so dass zwischen ihnen eine kapazitative Kopplung auftreten kann. Über diese Kopplung können elektrische Ladungen auf dem Rotor influenziert werden, die über die Welle des Rotors, die elektrisch mit dem Rotor gekoppelt ist, zu elektromagnetischen Störungen außerhalb der Asynchronmaschine führen können.
Bei Asynchronmaschinen werden die Wickelköpfe, die Kurzschlussringe und die Form des Gehäuses in der Regel nach mechanischen und magnetischen, aber nicht nach Gesichtspunkten unerwünschter kapazitiver Überkopplung entworfen.

Die DE 102 30 006 A1 zeigt ein Beispiel einer Asynchronmaschine mit einem Käfigläuferrotor, dessen Kurzschlussstäbe über zwei Kurschlussringe miteinander elektrisch verbunden sind.

Aus den Patentschriften EP 0 236 690 A2, GB 807 967 A und US 3 242 361 A sind elektrische Asynchronmaschinen bekannt, bei denen zwischen dem Wickelkopf und dem Kurzschlussring ein die Achse des Rotors umlaufender keilförmiger Spalt ausgebildet ist.
Aus den Patentschriften US 5 979 087 A, GB 571 896 A, US 6 011 338 A, US 2001/005106 A1, DE 10 2011 078428 A1 und US 2012/112571 A1 sind Asynchronmaschinen bekannt, bei denen im keilförmigen Spalt ein elektrisch leitfähiger, mit dem Gehäuse elektrisch verbundener Körper angeordnet ist.

### Offenbarung der Erfindung

Ausführungsformen der vorliegenden Erfindung können in vorteilhafter Weise ermöglichen, die elektromagnetische Verträglichkeit (EMV) einer Asynchronmaschine zu verbessern.

Die Erfindung betrifft eine elektrische Asynchronmaschine, beispielsweise den Antrieb eines Elektro- und Hybridfahrzeugs, wie etwa eines Pkws, Lkws oder Busses.

Gemäß einer Ausführungsform der Erfindung umfasst die Asynchronmaschine einen Stator mit wenigstens einem Wickelkopf an einem axialen Ende des Stators, ein Gehäuse, in dem der Stator befestigt ist, und einen im Gehäuse um eine Achse drehbar gelagerten Rotor, der einen Rotorkäfig aufweist, in dem durch den Stator Magnetfelder induzierbar sind, wobei der Rotorkäfig an wenigstens einem axialen Ende einen Kurzschlussring aufweist. Weiter ist zwischen dem Wickelkopf und dem Kurzschlussring ein die Achse des Rotors umlaufender keilförmiger Spalt ausgebildet, so dass eine kapazitative Kopplung zwischen dem Wickelkopf und dem Kurzschlussring vermindert ist.

Mit anderen Worten können der Kurzschlussring und/oder der Wickelkopf derart ausgestaltet bzw. angeordnet sein, dass einerseits die elektrischen Leiter im Stator und im Rotor möglichst nahe beieinander angeordnet sind, um hier eine möglichst starke magnetische Kopplung zu erreichen, aber andererseits die elektrischen Leiter des Wickelkopfes und des Kurzschlussrings auseinander geführt werden, so dass in diesem Bereich nur eine geringe elektrostatische Kopplung erfolgt.

Auf diese Weise kann die durch kapazitive Überkopplung zwischen dem Wickelkopf und dem Rotor induzierte Wechselspannung (die sogenannte Wellenspannung) in Bezug auf die effektiv wirksame Kapazität zwischen Phasenanschlüssen und der Welle reduziert werden. Der Wickelkopf induziert nur eine geringe Wechselspannung im Kurzschlussring bzw. im Rotor und der aus dem Gehäuse führenden Welle des Rotors. Auf diese Weise gelangen nur kleine elektrische Störfelder, die auf die Weise erzeugt werden, aus der elektrischen Maschine in deren Umgebung.

Zwischen dem Kurzschlussring und dem Wickelkopf können somit große Abstände und kleine gegenüberliegende Flächen vorgesehen sein. Um die Kapazität zwischen dem Rotor bzw. dem Kurzschlussring und dem Gehäuse zu erhöhen, können umgekehrt kleine Abstände und große gegenüberliegende Flächen zwischen dem Rotor bzw. dem Kurzschlussring und dem Gehäuse vorgesehen sein.

Gemäß einer Ausführungsform der Erfindung ist der Kurschlussring gegenüber der Achse des Rotors abgeschrägt und kann zur Bildung des keilförmigen Spalts eine Schrägfläche aufweisen. Diese (erste) Schrägfläche kann beispielsweise von der Achse weg weisen und eine erste, weiter innen liegende Seitenfläche des keilförmigen Spalts bilden.

Gemäß einer Ausführungsform der Erfindung ist der Wickelkopf gegenüber der Achse des Rotors abgeschrägt und kann zur Bildung des keilförmigen Spalts eine Schrägfläche aufweisen. Diese zweite Schrägfläche kann beispielsweise zu der Achse hin weisen und/oder eine zweite, weiter außen liegende Seitenfläche des keilförmigen Spalts bilden.

Erfindungsgemäß ist im keilförmigen Spalt ein elektrisch leitfähiger, mit dem Gehäuse elektrisch verbundener Körper angeordnet, um die kapazitative Kopplung zwischen dem Wickelkopf und dem Kurzschlussring zu vermindern und/oder die kapazitative Kopplung des Gehäuses mit dem Kurzschlussring zu erhöhen. Dieser elektrisch leitfähige Körper ist aus dem Material des Gehäuses (beispielsweise durch einen tiefgezogenen Abschnitt des Gehäuses) bereitgestellt.

Der mit dem Gehäuse elektrisch verbundene Körper zwischen dem Kurzschlussring und dem Wickelkopf kann als elektrische Abschirmung zwischen Kurzschlussring und Wickelkopf aufgefasst werden.

Die kapazitative Kopplung zwischen Wickelkopf, Kurzschlussring und Gehäuse kann somit durch eine besondere Formgestaltung von Wickelkopf, Kurzschlussring und Gehäuse im axialen Endbereich von Stator und Rotor eingestellt werden. Die Formgestaltung kann darauf abzielen, eine möglichst kleine Streukapazität zwischen dem Kurzschlussring und dem Wickelkopf und eine möglichst große Streukapazität zwischen Kurzschlussring und Gehäuse zu erhalten. Dadurch kann eine kapazitive Spannungsteilung und somit eine Reduktion der Wellenspannung erreicht werden.

Gemäß einer Ausführungsform der Erfindung ragt das Gehäuse in den keilförmigen Spalt hinein. Beispielsweise kann das Gehäuse ein Blechteil umfassen, das den Rotor und den Stator stirnseitig (in axialer Richtung) umgibt und das den Stator auch radial außen umgeben kann. Dieses Blechteil ist erfindungsgemäß in einem Abschnitt derart verformt (beispielsweise durch Pressen oder Tiefziehen), dass es in den keilförmigen Spalt hineinragt.

Dabei können zu beachtende Randbedingungen sein, dass eine hinreichende Kühlung, beispielsweise durch ein Fluid, das den Rotor und den Stator umspült, gewährleistet ist, und/oder dass unerwünschter magnetischer Streufluss im Bereich des Wickelkopfes begrenzt wird. Aus diesen Gründen kann es gewünscht sein, den Abstand von dem Kurzschlussring zu dem Gehäuse nicht wesentlich unter 2 mm abzusenken. Zur Begrenzung des unerwünschten magnetischen Streuflusses kann das Gehäuse bzw. das Blechteil aus Aluminium gefertigt sein.

Gemäß einer Ausführungsform der Erfindung weist das Gehäuse einen V-förmig verformten Abschnitt auf, der in den keilförmigen Spalt hineinragt. Das Gehäuse kann (bis auf einen kleinen Abstand) komplementär zum keilförmigen Spalt geformt sein.

Gemäß einer Ausführungsform der Erfindung weist das Gehäuse Lamellen auf, die aus dem Gehäuse in den keilförmigen Spalt hinein gebogen sind. Beispielsweise können im Blechteil des Gehäuses U- bzw. V-förmige Schlitze vorgesehen sein, die Lamellen bilden, die in Richtung der Achse gebogen werden können. In diesem Fall kann das Gehäuse am Kurzschlussring radial nach außen weitergeführt werden (wobei es zumindest teilweise nicht in den keilförmigen Spalt hineingeführt wird). Es kann somit tangentiale Fenster aufweisen, die beispielsweise aus dem Blechteil ausgestanzt sind und schräg nach innen gebogen sind. Auf diese Weise kann eine Struktur von abwechselnden Fenstern und Stegen im Blechteil entstehen.

Gemäß einer Ausführungsform der Erfindung ist am Gehäuse eine elektrisch leitfähige Ringstruktur befestigt, die in den keilförmigen Spalt hineinragt. Es ist auch möglich, dass ein Blechteil des Gehäuses außerhalb des Spalts am Rotor vorbeigeführt wird, wobei ein mit dem Blechteil verbundenes weiteres Blechteil in den keilförmigen Spalt hineinragt. Die leitfähige Ringstruktur bzw. das weitere Blechteil kann genauso wie das Gehäuse aus Aluminium gefertigt sein. Auf diese Weise kann (aufgrund der fehlenden Fenster) mehr Drehmoment vom Stator über das Gehäuse übertragen werden).

Gemäß einer Ausführungsform der Erfindung weist die Ringstruktur Lamellen auf, die in den keilförmigen Spalt hineinragen. Zur Verringerung von Wirbelströmen kann die leitfähige Ringstruktur eine kammähnliche Struktur aufweisen. Zur Erreichung der geforderten Schwingfestigkeit kann es eine Mindestdicke und/oder versteifende Falze aufweisen.

Gemäß einer Ausführungsform der Erfindung ist am Stator eine elektrisch leitfähige Ringstruktur befestigt, die vom Stator aus in den keilförmigen Spalt hineinragt. Diese (zweite) leitfähige Ringstruktur kann beispielsweise ein am Stator befestigtes Blech oder ein Blechring sein. Sie kann auch von einem sogenannten Nutschieber gebildet sein, d.h. einer Schutzfolie, die zwischen die Leiter im Stator und/oder dem Statorblechpaket geschoben wird, die auf der dem Rotor zugewandten Seite mit einer leitfähigen Schicht überzogen werden kann. Eine derartige Schutzfolie ist in der Regel bereits vorhanden und kann derart eingefügt werden, dass sie über das Statorpaket (das Nuten für die Leiter im Stator bereitstellt) in axialer Richtung hinausragt.

Es ist zu verstehen, dass diese Ausgestaltung des Wickelkopfes, des Kurzschlussrings und des Gehäuses nicht nur auf einer Seite, sondern auf beiden Seiten der Asynchronmaschine erfolgen kann.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen schematischen Längsschnitt durch eine Asynchronmaschine gemäß einer Ausführungsform der Erfindung.
Fig. 2 zeigt einen schematischen Längsschnitt durch eine Asynchronmaschine gemäß einer weiteren Ausführungsform der Erfindung.
Fig. 3 zeigt eine schematische Ansicht von Lamellen, die an einem Gehäuse einer Asynchronmaschine gemäß einer Ausführungsform der Erfindung vorgesehen sind.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

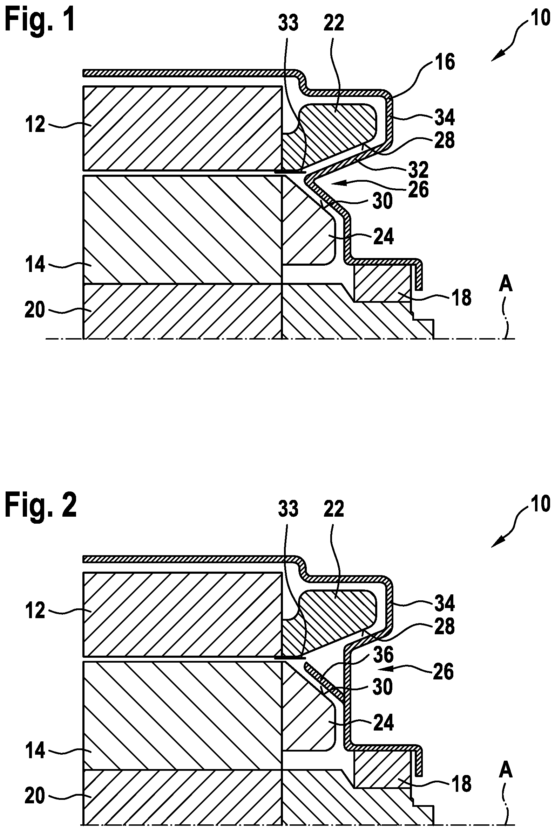

Fig. 1 zeigt eine Asynchronmaschine 10, die einen Stator 12, einen im Stator 12 rotierbar gelagerten Rotor 14 und ein Gehäuse 16 umfasst. Der Stator 12 ist am Gehäuse 16 befestigt, das wiederum ein Lager 18 bereitstellt, in dem der Rotor 14 mittels einer Welle 20 um eine Achse A gelagert ist.

Am axialen Ende (bezüglich der Achse A) weist der Stator 12 einen Wickelkopf 22 auf, der Wicklungen oder Stäbe im Stator 12 elektrisch miteinander verbindet. Ebenso weist der Rotor 14 am axialen Ende einen Kurzschlussring 24 auf, der die Kurzschlussstäbe des Rotors elektrisch miteinander verbindet.

Um den Wickelkopf 22 und den Kurzschlussring 24 möglichst gut voneinander elektrostatisch zu entkoppeln, sind der Wickelkopf 22, der Kurzschlussring 24 und das Gehäuse 16 besonders geformt. Zwischen ihnen ist ein keilförmiger Spalt 26 gebildet, der von zwei Schrägflächen 28, 30 begrenzt wird. Sowohl der Spalt 26 als auch die beiden Schrägflächen 28, 30 (die bezüglich der Achse A schräg verlaufen) umlaufen die Achse A.

Die Schrägfläche 28 wird durch den Wickelkopf 22 bereitgestellt, der entsprechend gewickelt wurde, so dass alle seine Leiter nicht im Bereich des Spalts 26 verlaufen.

Die Schrägfläche 30 wird vom Kurzschlussring 24 bereitgestellt, der am axialen Ende in Umfangsrichtung gesehen eine glatte Oberfläche aufweisen kann, um eine möglichst hohe Streukapazität zum Gehäuse 16 aufzuweisen. Der Kurzschlussring 24 kann aber auch gezielte Unebenheiten (wie ein Lüfter) besitzen, um einen Kühlluftstrom anzutreiben.

Da sich die beiden Schrägflächen 28, 30 in axialer Richtung von der elektrischen Maschine 10 weg voneinander entfernen, ist die elektrische Kapazität zwischen ihnen bereits niedriger, als wenn sie parallel verlaufen würden. Zusätzlich ragt ein Abschnitt 32 des Gehäuses 16 in den Spalt 26 hinein, der diesen Effekt verstärkt. Der Abschnitt 32 wird von einem Blechteil 34 bereitgestellt, das den Stator 12 und den Rotor 14 umgibt und das von dem Lager 18 getragen wird. Das Blechteil 34 verläuft in radialer Richtung am Kurzschlussring 24 vorbei, verläuft in radialer Richtung und anschließend in axialer Richtung um den Wickelkopf 22 und dann in axialer Richtung um den Stator 12.

Zwischen dem Wickelkopf 22 und dem Kurzschlussring 24 ist das Blechteil 22 V-förmig verformt, um den Abschnitt 32 zu bilden.

Weiter kann auch eine elektrisch leitende Ringstruktur 33 am Stator 12 befestigt sein, die auf Höhe des Innenradius des Stators 12 über das Statorpaket hinausragt. Diese Ringstruktur 33 kann beispielsweise aus Blech gefertigt sein oder kann dadurch bereitgestellt werden, dass Nutschieber (Schutzfolien für in Nuten des Stators 12 gesteckte Leiter) auf ihrer Außenseite metallisch beschichtet werden.

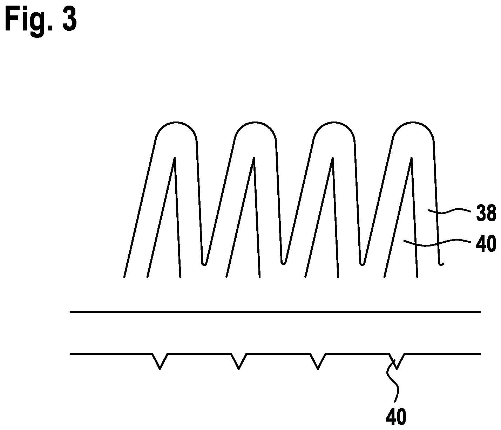

Wie aus der Fig. 2 hervorgeht, kann das Gehäuse 16 bzw. das Blechteil 34 auch in radialer Richtung am Spalt 26 vorbei verlaufen. Innen am Gehäuse bzw. am Blechteil 34 kann eine Ringstruktur 36 befestigt (beispielsweise geschweißt oder genietet) sein, die in den Spalt 26 hineinragt, um die Kapazität zwischen dem Kurzschlussring 24 und dem Gehäuse zu erhöhen und die Kapazität zwischen dem Kurzschlussring 24 und dem Wickelkopf 22 zu vermindern. Diese Ringstruktur 36 kann entweder gleichförmig um den gesamten Umfang des Kurzschlussrings 24 verlaufen oder aber auch Lamellen 38 aufweisen (siehe Fig. 3). Mit Lamellen 38 bzw. einer kammförmigen Struktur können Wirbelströme vermindert werden.

Alternativ dazu können in dem Gehäuse 16 bzw. dem Blechteil 34 Lamellen 38 vorgesehen sein, die in Richtung der Achse bzw. nach innen gebogen sind. Diese Lamellen 38 oder Flügel können tangentiale Segmente sein, die aus dem Gehäuse 16 bzw. dem Blechteil 34 ausgestanzt worden sind.

Der Neigungswinkel der Ringstruktur 36 bzw. der Lamellen 38 gegen die Achse A kann auch sehr klein sein (weniger als 10°). Auf diese Weise kann deren Anbringungsort dann weiter radial außen, beispielsweise knapp unter dem Außenradius des Rotors 14, erfolgen. Die Schrägfläche 30 des Kurzschlussrings 24 kann dann auch einen geringen Neigungswinkel gegenüber der Achse A aufweisen (auch weniger als 10°).

Fig. 3 zeigt eine axiale Sicht und einen Querschnitt von Lamellen 38, die beispielsweise an der Ringstruktur 36 vorgesehen oder aus dem Blechteil 36 ausgestanzt sein können. Die Lamellen 38 können eine U-Form oder V-Form aufweisen und/oder können eine Verstärkung 40 aufweisen, beispielsweise einen Falz, um sie mechanisch zu stabilisieren.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

Bezugszeichen in den Ansprüchen sind nicht als Einschränkung anzusehen.

## Patentansprüche

1. Elektrische Asynchronmaschine (10), umfassend:
einen Stator (12) mit wenigstens einem Wickelkopf (22) an einem axialen Ende des Stators (12);
ein Gehäuse (16), in dem der Stator (12) befestigt ist;
einen im Gehäuse (16) um eine Achse (A) drehbar gelagerten Rotor (14), in dem durch den Stator (12) Magnetfelder induzierbar sind, wobei der Rotor (14) an einem axialen Ende einen Kurzschlussring (30) aufweist;
wobei zwischen dem Wickelkopf (22) und dem Kurzschlussring (24) ein die Achse (A) des Rotors (14) umlaufender keilförmiger Spalt (26) ausgebildet ist, so dass eine kapazitative Kopplung zwischen dem Wickelkopf (22) und dem Kurzschlussring (24) vermindert ist in Bezug auf einen fiktiven parallelen Verlauf von Wickelkopf (22) und Kurzschlussring (24), **dadurch gekennzeichnet, dass**
im keilförmigen Spalt (26) ein elektrisch leitfähiger, mit dem Gehäuse (16) elektrisch verbundener Körper (32, 36, 33) angeordnet ist, um die kapazitative Kopplung zwischen dem Wickelkopf (22) und dem Kurzschlussring (24) zu vermindern und/oder die kapazitative Kopplung des Gehäuses (16) mit dem Kurzschlussring (24) zu erhöhen, wobei das Gehäuse (16) einen verformten Abschnitt (32) aufweist, der in den keilförmigen Spalt (26) hineinragt.

2. Elektrische Asynchronmaschine (10) nach Anspruch 1,
wobei der Kurschlussring (24) gegenüber der Achse (A) des Rotors (14) abgeschrägt ist und zur Bildung des keilförmigen Spalts (26) eine Schrägfläche (30) aufweist.

3. Elektrische Asynchronmaschine (10) nach Anspruch 1 oder 2,
wobei der Wickelkopf (22) gegenüber der Achse (A) des Rotors (14) abgeschrägt ist und zur Bildung des keilförmigen Spalts (26) eine Schrägfläche (30) aufweist.

4. Elektrische Asynchronmaschine (10) nach einem der vorhergehenden Ansprüche,
wobei das Gehäuse (16) in den keilförmigen Spalt (26) hineinragt.

5. Elektrische Asynchronmaschine (10) nach einem der vorhergehenden Ansprüche,
wobei das Gehäuse (16) Lamellen aufweist, die aus dem Gehäuse (16) in den keilförmigen Spalt (26) hinein gebogen sind.

6. Elektrische Asynchronmaschine (10) nach einem der vorhergehenden Ansprüche,
wobei am Gehäuse (16) eine elektrisch leitfähige Ringstruktur (36) befestigt ist, die in den keilförmigen Spalt hineinragt.

7. Elektrische Asynchronmaschine (10) nach Anspruch 6,
wobei die Ringstruktur (36) Lamellen (38) aufweist, die in den keilförmigen Spalt (26) hineinragen.

8. Elektrische Asynchronmaschine (10) nach einem der vorhergehenden Ansprüche,
wobei am Stator (12) eine elektrisch leitfähige Ringstruktur (33) befestigt ist, die vom Stator (12) aus in den keilförmigen Spalt (26) hineinragt.

## Claims

1. Electric asynchronous machine (10), comprising:
a stator (12) with at least one winding head (22) at one axial end of the stator (12);
a housing (16), in which the stator (12) is fastened;
a rotor (14) which is mounted in the housing (16) such that it can be rotated about an axis (A) and in which magnetic fields can be induced by way of the stator (12), the rotor (14) having a short-circuit ring (30) at one axial end;
a wedge-shaped gap (26) which runs around the axis (A) of the rotor (14) being configured between the winding head (22) and the short-circuit ring (24), with the result that a capacitive coupling between the winding head (22) and the short-circuit ring (24) is reduced in relation to a hypothetical parallel course of the winding head (22) and the short-circuit ring (24),
**characterized in that**
an electrically conductive body (32, 36, 33) which is connected electrically to the housing (16) is arranged in the wedge-shaped gap (26), in order to reduce the capacitive coupling between the winding head (22) and the short-circuit ring (24) and/or to increase the capacitive coupling of the housing (16) to the short-circuit ring (24),
the housing (16) having a deformed section (32) which protrudes into the wedge-shaped gap (26).

2. Electric asynchronous machine (10) according to Claim 1,
the short-circuit ring (24) being bevelled with respect to the axis (A) of the rotor (14) and having an oblique face (30) in order to form the wedge-shaped gap (26).

3. Electric asynchronous machine (10) according to Claim 1 or 2,
the winding head (22) being bevelled with respect to the axis (A) of the rotor (14) and having an oblique face (30) in order to form the wedge-shaped gap (26).

4. Electric asynchronous machine (10) according to one of the preceding claims,
the housing (16) protruding into the wedge-shaped gap (26) .

5. Electric asynchronous machine (10) according to one of the preceding claims,
the housing (16) having slats which are bent out of the housing (16) into the wedge-shaped gap (26).

6. Electric asynchronous machine (10) according to one of the preceding claims,
an electrically conductive ring structure (36) which protrudes into the wedge-shaped gap being fastened to the housing (16).

7. Electric asynchronous machine (10) according to Claim 6,
the ring structure (36) having slats (38) which protrude into the wedge-shaped gap (26).

8. Electric asynchronous machine (10) according to one of the preceding claims,
an electrically conductive ring structure (33) which protrudes from the stator (12) into the wedge-shaped gap (26) being fastened to the stator (12).

## Revendications

1. Machine asynchrone électrique (10), comprenant :
un stator (12) comprenant au moins une tête d'enroulement (22) au niveau d'une extrémité axiale du stator (12) ;
un carter (16) dans lequel est fixé le stator (12) ;
un rotor (14) monté à rotation autour d'un axe (A) dans le carter (16), dans lequel des champs magnétiques peuvent être induits par le stator (12), le rotor (14) possédant une bague de court-circuit (30) au niveau d'une extrémité axiale ;
un entrefer (26) cunéiforme circulaire autour de l'axe (A) du rotor (14) étant formé entre la tête d'enroulement (22) et la bague de court-circuit (24), de sorte qu'un couplage capacitif entre la tête d'enroulement (22) et la bague de court-circuit (24) est réduit en référence à un tracé parallèle fictif de la tête d'enroulement (22) et de la bague de court-circuit (24),
**caractérisée en ce que**
un corps (32, 36, 33) électriquement conducteur et relié électriquement au carter (16) est disposé dans l'entrefer (26) cunéiforme, afin de réduire le couplage capacitif entre la tête d'enroulement (22) et la bague de court-circuit (24) et/ou d'augmenter le couplage capacitif du carter (16) avec la bague de court-circuit (24),
le carter (16) possédant une portion déformée (32) qui fait saillie dans l'entrefer (26) cunéiforme.

2. Machine asynchrone électrique (10) selon la revendication 1, la bague de court-circuit (24) étant biseautée par rapport à l'axe (A) du rotor (14) et possédant une face biseautée (30) pour la formation de l'entrefer (26) cunéiforme.

3. Machine asynchrone électrique (10) selon la revendication 1 ou 2, la tête d'enroulement (22) étant biseautée par rapport à l'axe (A) du rotor (14) et possédant une face biseautée (30) pour la formation de l'entrefer (26) cunéiforme.

4. Machine asynchrone électrique (10) selon l'une des revendications précédentes, le carter (16) faisant saillie dans l'entrefer (26) cunéiforme.

5. Machine asynchrone électrique (10) selon l'une des revendications précédentes, le carter (16) possédant des lamelles qui sont cintrées depuis le carter (16) à l'intérieur de l'entrefer (26) cunéiforme.

6. Machine asynchrone électrique (10) selon l'une des revendications précédentes, une structure annulaire (36) électriquement conductrice étant fixée au carter (16), laquelle fait saillie dans l'entrefer cunéiforme.

7. Machine asynchrone électrique (10) selon la revendication 6, la structure annulaire (36) possédant des lamelles (38) qui font saillie dans l'entrefer (26) cunéiforme.

8. Machine asynchrone électrique (10) selon l'une des revendications précédentes, une structure annulaire (33) électriquement conductrice étant fixée au stator (12), laquelle fait saillie depuis le stator (12) dans l'entrefer (26) cunéiforme.
